# EUROPEAN PATENT SPECIFICATION

(11) **EP 4 359 147 B1**
(45) Date of publication and mention of the grant of the patent: **25.11.2026**
(21) Application number: 22738197.7
(22) Date of filing: 13.06.2022
(51) Int. Cl.: B06B 1/02, G06F 3/01

(54) **METHODS AND SYSTEMS FOR MANAGING MIXED MODE ELECTROMECHANICAL ACTUATOR DRIVE**
VERFAHREN UND SYSTEME ZUR VERWALTUNG EINES ELEKTROMECHANISCHEN MISCHMODUSAKTUATORANTRIEBS
PROCÉDÉS ET SYSTÈMES DE GESTION DE COMMANDE D'ACTIONNEUR ÉLECTROMÉCANIQUE EN MODE MIXTE

(30) Priority: 22.06.2021 US 202163213612 P; 11.01.2022 US 202217572769
(43) Date of publication of application: 01.05.2024
(73) Proprietor: Cirrus Logic International Semiconductor Ltd., Quartermile Edinburgh EH3 9EG (GB)
(72) Inventor: HENDRIX, Jon D., Austin, Texas 78701 (US); MARCHAIS, Emmanuel, Austin, Texas 78701 (US); JOSEPH, Nicholas, Austin, Texas 78701 (US); TRAN, Bryant, Austin, Texas 78701 (US); JANKO, Marco A., Austin, Texas 78701 (US); PREECS, Noel, Austin, Texas 78701 (US)
(74) Representative: Haseltine Lake Kempner LLP
(86) International application number: PCT/US2022/033230
(87) International publication number: WO 2022/271475

(56) References cited:
- US-A1- 2019 253 031
- US-A1- 2019 384 393
- US-A1- 2020 150 767
- US-A1- 2020 306 796

## Description

### RELATED APPLICATION

The present disclosure claims priority to U.S. Provisional Patent Application No. 63/213,612 filed June 22, 2021.

The present disclosure cross-references U.S. Patent No. 10,828,672 entitled "Driver Circuitry" to Stahl et al. and assigned to Cirrus Logic, Inc. (hereafter referred to as the "Stahl patent"), U.S. Patent Publication No. 2021/0175869 entitled "Methods and Systems for Detecting and Managing Amplifier Instability" to Taipale (hereafter referred to as the "Taipale patent application"), and U.S. Patent Publication No. 2021/0174777 entitled "Methods and Systems for Estimating Coil Impedance of an Electromagnetic Transducer" to Marchais et al. (hereafter referred to as the "Marchais patent application").

### FIELD OF DISCLOSURE

The present disclosure relates in general to use of an amplifier to drive a haptic vibrational load in both open loop and closed loop operating modes, and the management of signals sent to the amplifier when switching between these two operating modes.

### BACKGROUND

Vibro-haptic transducers, for example electromechanical actuators such as linear resonant actuators (LRAs), are widely used in portable devices such as mobile phones to generate vibrational feedback to a user. Vibro-haptic feedback in various forms creates different feelings of touch to a user's skin, and may play increasing roles in human-machine interactions for modern devices.

An LRA may be modelled as a mass-spring electro-mechanical vibration system. When driven with appropriately designed or controlled driving signals, an LRA may generate certain desired forms of vibrations. For example, a sharp and clear-cut vibration pattern on a user's finger may be used to create a sensation that mimics a mechanical button click. This clear-cut vibration may then be used as a virtual switch to replace mechanical buttons.

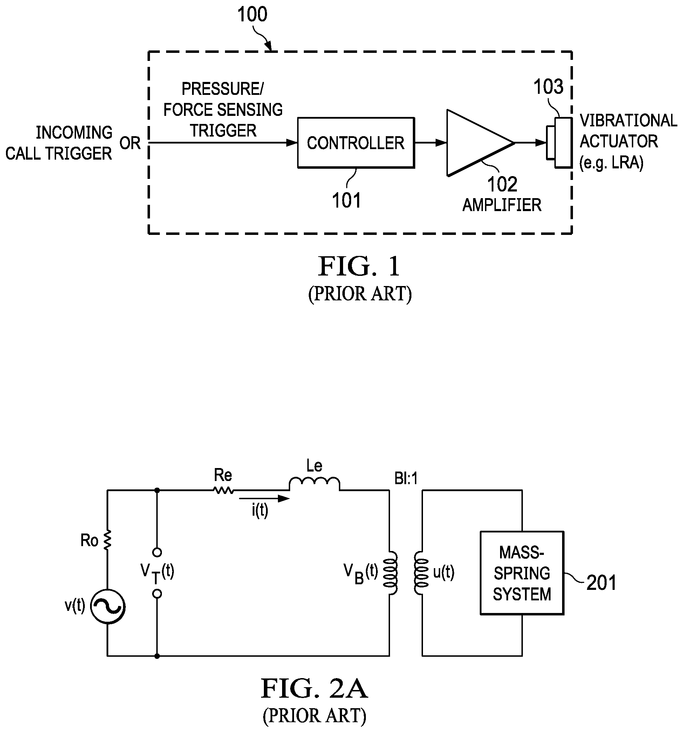

FIGURE 1 illustrates an example of a vibro-haptic system in a device 100. Device 100 may comprise a controller 101 configured to control a signal applied to an amplifier 102. Amplifier 102 may then drive a haptic transducer 103 based on the signal. Controller 101 may be triggered by a trigger to output to the signal. The trigger may for example comprise a pressure or force sensor on a screen or virtual button of device 100.

Among the various forms of vibro-haptic feedback, tonal vibrations of sustained duration may play an important role to notify the user of the device of certain predefined events, such as incoming calls or messages, emergency alerts, and timer warnings, etc. In order to generate tonal vibration notifications efficiently, it may be desirable to operate the haptic actuator at its resonance frequency.

The resonance frequency *f₀* of a haptic transducer may be approximately estimated as: ${f}_{0} = \frac{1}{2 ∗ π ∗ \sqrt{C ∗ M}}$ (1) where C is the compliance of the spring system, and M is the equivalent moving mass, which may be determined based on both the actual moving part in the haptic transducer and the mass of the portable device holding the haptic transducer.

Due to sample-to-sample variations in individual haptic transducers, mobile device assembly variations, temporal component changes caused by aging, component changes caused by self-heating, and use conditions such as various different strengths of a user gripping of the device, the vibration resonance of the haptic transducer may vary from time to time.

FIGURE 2A illustrates an example of a linear resonant actuator (LRA) modelled as a linear system including a mass-spring system 201. LRAs are non-linear components that may behave differently depending on, for example, the voltage levels applied, the operating temperature, and the frequency of operation. However, these components may be modelled as linear components within certain conditions.

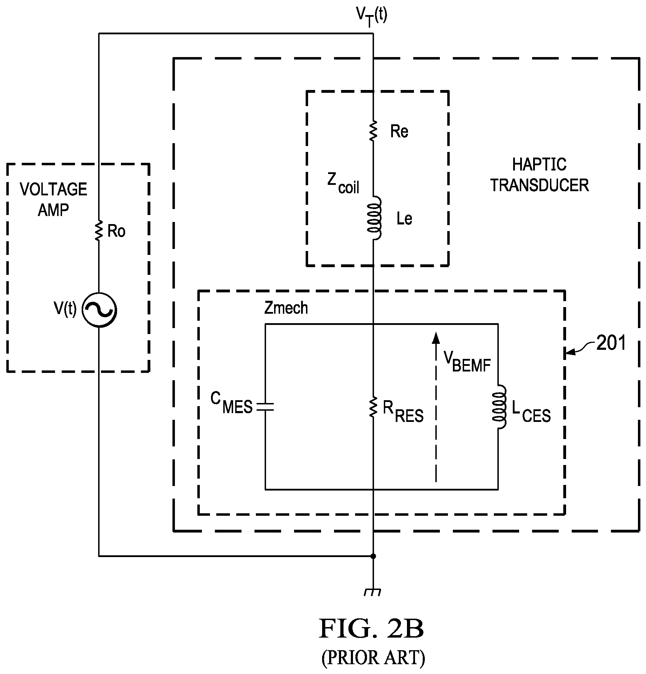

FIGURE 2B illustrates an example of an LRA modelled as a linear system, including an electrically equivalent model of mass-spring system 201 of LRA. In this example, the LRA is modelled as a third order system having electrical and mechanical elements. In particular, *Re* and *Le* are the DC resistance and coil inductance of the coil-magnet system, respectively; and *Bl* is the magnetic force factor of the coil. The driving amplifier outputs the voltage waveform *V*(*t*) with the output impedance *Ro*. The terminal voltage *V_{T}*(*t*) may be sensed across the terminals of the haptic transducer. The mass-spring system 201 moves with velocity *u*(*t*), which may be proportional to back-electromotive force *V_{BEMF}.*

An electromagnetic load such as an LRA may be characterized by its impedance *Z_{LRA}* as seen as the sum of a coil impedance *Z_{coil}* and a mechanical impedance *Z_{mech}*: ${Z}_{LRA} = {Z}_{coil} + {Z}_{mech}$ (2)

Coil impedance *Z_{coil}* may in turn comprise a direct current (DC) resistance *Re* in series with an inductance *Le*: ${Z}_{coil} = Re + s ∗ Le$ (3)

Mechanical impedance *Z_{mech}* may be defined by three parameters including the resistance at resonance *R_{RES}* representing an electrical resistance representative of mechanical friction of the mass-spring system of the haptic transducer, a capacitance *C_{MES}* representing an electrical capacitance representative of an equivalent moving mass *M* of the mass-spring system of the haptic transducer, and inductance *L_{CES}* representative of a compliance *C* of the mass-spring system of the haptic transducer. The electrical equivalent of the total mechanical impedance is the parallel connection of *R_{RES}, C_{MES}, L_{CES}.* The Laplace transform of this parallel connection is described by: ${Z}_{mech} \left(s\right) = \frac{1}{\left(\frac{1}{{R}_{RES}}+\frac{1}{{L}_{CES} ∗ s}+{C}_{MES}∗s\right)}$ (4)

The resonant frequency *f*₀ of the haptic transducer can be represented as: ${f}_{0} = \frac{1}{\left(2∗π∗\sqrt{{L}_{CES} ∗ {C}_{MES} ∗}\right)}$ (5)

The quality factor Q of the LRA can be represented as: $Q = \frac{{R}_{RES} ∗ Re}{{R}_{RES} + Re} ∗ \sqrt{\frac{{C}_{MES}}{{L}_{CES}}}$ (6)

Referring to equation (6), it may appear non-intuitive that the expression involves a subexpression describing the parallel connection of resistances *Re* and *R_{RES}* (i.e., $\frac{{R}_{RES} ∗ Re}{{R}_{RES} + Re}$) while in FIGURE 2B these resistances are shown in a series connection. However, such may be the case where a driving voltage *Ve* is oscillating but then abruptly turns off and goes to zero. The voltage amplifier shown in FIGURE 2B may be considered to have a low source impedance, ideally zero source impedance. Under these conditions, when driving voltage *Ve* goes to zero, the voltage amplifier effectively disappears from the circuit. At that point, the top-most terminal of resistance *Re* in FIGURE 2B is grounded, as is the bottom-most terminal of resistance *R_{RES},* and so resistances *Re* and *R_{RES}* are indeed connected in parallel as reflected in equation (6).

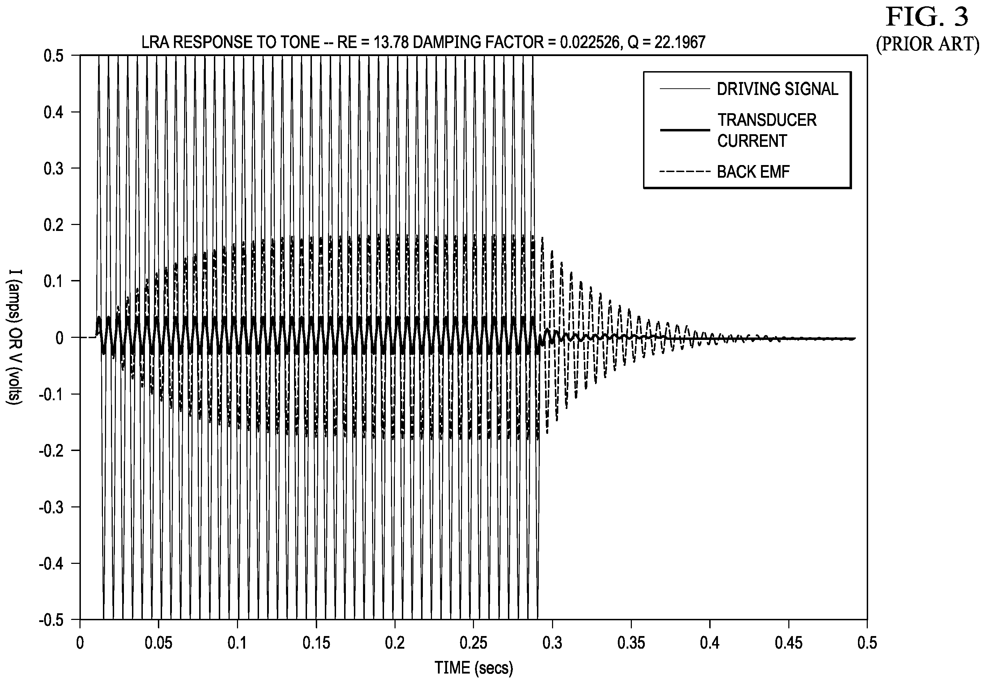

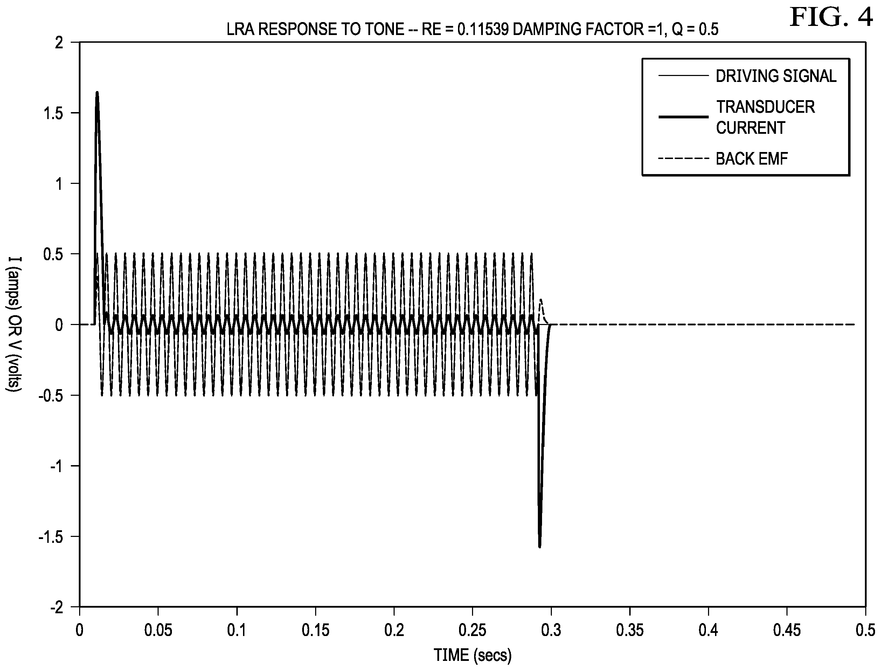

Electromagnetic transducers, such as LRAs or micro-speakers, may have slow response times. FIGURE 3 is a graph of an example response of an LRA, depicting an example driving signal to the LRA, a current through the LRA, and a back electromotive force (back EMF) of the LRA, wherein such back EMF may be proportional to the velocity of a moving element (e.g., coil or magnet) of the transducer. As shown in FIGURE 3, the attack time of the back EMF may be slow as energy is transferred to the LRA, and some "ringing" of the back EMF may occur after the driving signal has ended as the mechanical energy stored in the LRA is discharged. In the context of a haptic LRA, such behavioral characteristic may result in a "mushy" feeling click or pulse, instead of a "crisp" tactile response. Thus, it may be desirable for an LRA to instead have a response similar to that shown in FIGURE 4, in which there exists minimal ringing after the driving signal has ended, and which may provide a more "crisp" tactile response in a haptic context. Accordingly, it may be desirable to apply processing to a driving signal such that when the processed driving signal is applied to the transducer, the velocity or back EMF of the transducer more closely approaches that of FIGURE 4.

US2020/150767 discloses a haptic-enabled device having a haptic actuator, a movement sensor, and a control circuit. The control circuit determines a drive signal for the haptic actuator based on desired movement for a haptic effect and based on a model that describes transient behavior of the haptic actuator. The control circuit further measures movement output by the haptic actuator based on the drive signal being applied to the haptic actuator. The control circuit determines a movement error that indicates a difference between the measured movement and the desired movement, and adjusts the drive signal based on the movement error to generate an adjusted drive signal. The adjusted drive signal is applied to the haptic actuator to generate the haptic effect.

US2019/384393 discloses systems and methods for multi-level closed loop control of haptic effects. One illustrative system for multi-level closed loop control of haptic effects includes a haptic output device configured to output a haptic effect, a sensor configured to sense the output of the haptic output device and generate a sensor signal, and a processor in communication with the sensor. The processor is configured to: receive a reference signal, receive the sensor signal, determine an error based at least in part on the reference signal and the sensor signal, generate a haptic signal based at least in part on the reference signal and the error, and transmit the haptic signal to a haptic output device configured to output a haptic effect based on the haptic signal.

### SUMMARY

In accordance with the teachings of the present disclosure, the disadvantages and problems associated with gracefully switching the driving modes of an amplifier when coupled to an electromechanical load between open loop and negative impedance closed loop modes may be reduced or eliminated. In a first aspect, the present invention refers to a method according to claim 1. In a second aspect, the present invention refers to a transducer driving system according to claim 15.

Technical advantages of the present disclosure may be readily apparent to one having ordinary skill in the art from the figures, description and claims included herein. The objects and advantages of the embodiments will be realized and achieved at least by the elements, features, and combinations particularly pointed out in the claims.

It is to be understood that both the foregoing general description and the following detailed description are examples and explanatory and are not restrictive of the claims set forth in this disclosure.

### BRIEF DESCRIPTION OF THE DRAWINGS

A more complete understanding of the present embodiments and advantages thereof may be acquired by referring to the following description taken in conjunction with the accompanying drawings, in which like reference numbers indicate like features, and wherein:
FIGURE 1 illustrates an example of a vibro-haptic system in a device, as is known in the art;
FIGURES 2A and 2B each illustrate an example of a Linear Resonant Actuator (LRA) modelled as a linear system, as is known in the art;
FIGURE 3 illustrates a graph of example waveforms of an electromagnetic load, as is known in the art;
FIGURE 4 illustrates a graph of desirable example waveforms of an electromagnetic load, in accordance with embodiments of the present disclosure;
FIGURE 5 illustrates a block diagram of selected components of an example mobile device, in accordance with embodiments of the present disclosure;
FIGURE 6 illustrates a block diagram of selected components of an example integrated haptic system, in accordance with embodiments of the present disclosure;
FIGURE 7 illustrates an example transducer driving system for improving transducer dynamics when switching operating modes between open loop and negative impedance closed loop, in accordance with embodiments of the present disclosure;
FIGURE 8 illustrates a table of example classifications of operating modes of the example transducer driving system of FIGURE 7 based on a value of a multiplier's input, in accordance with embodiments of the present disclosure;
FIGURE 9 illustrates graphs of an example voltage driving signal and an example sensed terminal voltage for the example transducer driving system of FIGURE 7 that illustrate different waveform sub-sections that are correlated to haptic terminology for a haptic event, in accordance with embodiments of the present disclosure;
FIGURE 10 illustrates a graph of an example acceleration versus time plot that illustrates a problem associated with changing the level of negative impedance feedback correction for the example transducer driving system of FIGURE 7, in accordance with embodiments of the present disclosure;
FIGURE 11 illustrates a graph of an example plot of a transfer function between a raw transducer driving signal and a sensed terminal voltage *V_{T}*(*t*) for the example transducer driving system of FIGURE 7, in accordance with embodiments of the present disclosure;
FIGURE 12 illustrates an example of a linear resonant actuator (LRA) modelled as a linear system and including a negative resistance, in accordance with embodiments of the present disclosure;
FIGURE 13 shows example waveforms for the example transducer driving system of FIGURE 7 that illustrate the benefits of the compensation, in accordance with embodiments of the present disclosure;
FIGURE 14 illustrates a graph of an example acceleration versus time plot with compensation applied for the example transducer driving system of FIGURE 7, in accordance with embodiments of the present disclosure;
FIGURE 15 illustrates graphs of example waveforms associated with the example transducer driving system of FIGURE 7 that illustrate a problem associated with driving very large playback waveforms during a closed-loop operating mode, in accordance with embodiments of the present disclosure; and
FIGURE 16 illustrates graphs of example waveforms for the example transducer driving system of FIGURE 7 that depict management of a control signal that strikes a balance between preventing clipping and maintaining closed loop steady state performance, in accordance with embodiments of the present disclosure.

### DETAILED DESCRIPTION

The description below sets forth example embodiments according to this disclosure. Further example embodiments and implementations will be apparent to those having ordinary skill in the art. Further, those having ordinary skill in the art will recognize that various equivalent techniques may be applied in lieu of, or in conjunction with, the embodiment discussed below, and all such equivalents should be deemed as being encompassed by the present disclosure.

Various electronic devices or smart devices may have transducers, speakers, and acoustic output transducers, for example any transducer for converting a suitable electrical driving signal into an acoustic output such as a sonic pressure wave or mechanical vibration. For example, many electronic devices may include one or more speakers or loudspeakers for sound generation, for example, for playback of audio content, voice communications and/or for providing audible notifications.

Such speakers or loudspeakers may comprise an electromagnetic actuator, for example a voice coil motor, which is mechanically coupled to a flexible diaphragm, for example a conventional loudspeaker cone, or which is mechanically coupled to a surface of a device, for example the glass screen of a mobile device. Some electronic devices may also include acoustic output transducers capable of generating ultrasonic waves, for example for use in proximity detection type applications and/or machine-to-machine communication.

Many electronic devices may additionally or alternatively include more specialized acoustic output transducers, for example, haptic transducers, tailored for generating vibrations for haptic control feedback or notifications to a user. Additionally, or alternatively, an electronic device may have a connector, e.g., a socket, for making a removable mating connection with a corresponding connector of an accessory apparatus, and may be arranged to provide a driving signal to the connector so as to drive a transducer, of one or more of the types mentioned above, of the accessory apparatus when connected. Such an electronic device will thus comprise driving circuitry for driving the transducer of the host device or connected accessory with a suitable driving signal. For acoustic or haptic transducers, the driving signal will generally be an analog time varying voltage signal, for example, a time varying waveform.

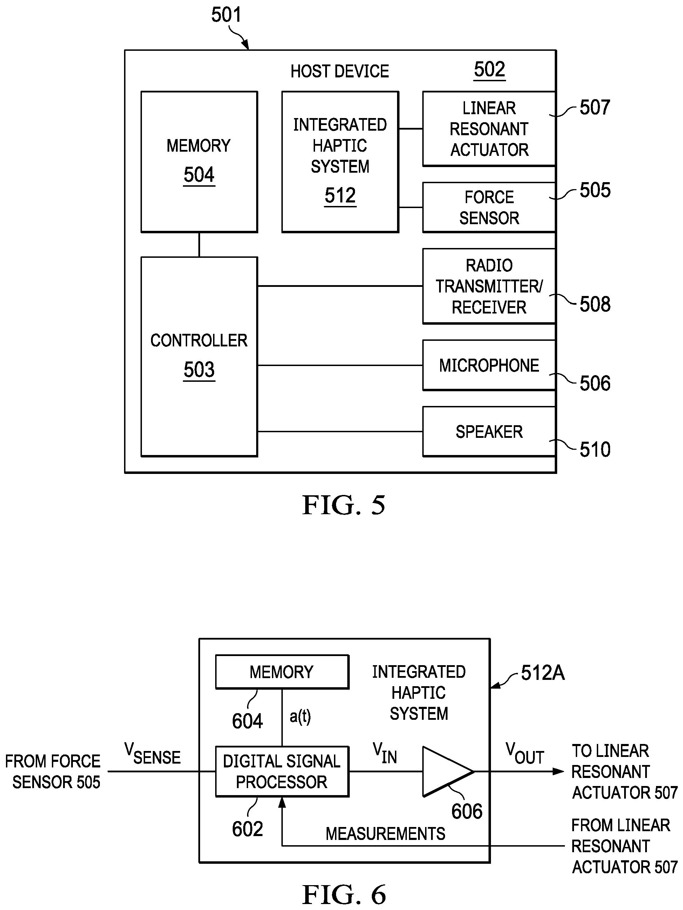

FIGURE 5 illustrates a block diagram of selected components of an example host device 502, in accordance with embodiments of the present disclosure. As shown in FIGURE 5, host device 502 may comprise an enclosure 501, a controller 503, a memory 504, a force sensor 505, a microphone 506, a linear resonant actuator 507, a radio transmitter/receiver 508, a speaker 510, and an integrated haptic system 512.

Enclosure 501 may comprise any suitable housing, casing, or other enclosure for housing the various components of host device 502. Enclosure 501 may be constructed from plastic, metal, and/or any other suitable materials. In addition, enclosure 501 may be adapted (e.g., sized and shaped) such that host device 502 is readily transported on a person of a user of host device 502. Accordingly, host device 502 may include but is not limited to a smart phone, a tablet computing device, a handheld computing device, a personal digital assistant, a notebook computer, a video game controller, or any other device that may be readily transported on a person of a user of host device 502.

Controller 503 may be housed within enclosure 501 and may include any system, device, or apparatus configured to interpret and/or execute program instructions and/or process data, and may include, without limitation, a microprocessor, microcontroller, digital signal processor (DSP), application specific integrated circuit (ASIC), or any other digital or analog circuitry configured to interpret and/or execute program instructions and/or process data. In some embodiments, controller 503 interprets and/or executes program instructions and/or processes data stored in memory 504 and/or other computer-readable media accessible to controller 503.

Memory 504 may be housed within enclosure 501, may be communicatively coupled to controller 503, and may include any system, device, or apparatus configured to retain program instructions and/or data for a period of time (e.g., computer-readable media). Memory 504 may include random access memory (RAM), electrically erasable programmable read-only memory (EEPROM), a Personal Computer Memory Card International Association (PCMCIA) card, flash memory, magnetic storage, opto-magnetic storage, or any suitable selection and/or array of volatile or non-volatile memory that retains data after power to host device 502 is turned off.

Microphone 506 may be housed at least partially within enclosure 501, may be communicatively coupled to controller 503, and may comprise any system, device, or apparatus configured to convert sound incident at microphone 506 to an electrical signal that may be processed by controller 503, wherein such sound is converted to an electrical signal using a diaphragm or membrane having an electrical capacitance that varies based on sonic vibrations received at the diaphragm or membrane. Microphone 506 may include an electrostatic microphone, a condenser microphone, an electret microphone, a microelectromechanical systems (MEMS) microphone, or any other suitable capacitive microphone.

Radio transmitter/receiver 508 may be housed within enclosure 501, may be communicatively coupled to controller 503, and may include any system, device, or apparatus configured to, with the aid of an antenna, generate and transmit radio-frequency signals as well as receive radio-frequency signals and convert the information carried by such received signals into a form usable by controller 503. Radio transmitter/receiver 508 may be configured to transmit and/or receive various types of radio-frequency signals, including without limitation, cellular communications (e.g., 2G, 3G, 4G, LTE, etc.), short-range wireless communications (e.g., BLUETOOTH), commercial radio signals, television signals, satellite radio signals (e.g., GPS), Wireless Fidelity, etc.

A speaker 510 may be housed at least partially within enclosure 501 or may be external to enclosure 501, may be communicatively coupled to controller 503, and may comprise any system, device, or apparatus configured to produce sound in response to electrical audio signal input. In some embodiments, a speaker may comprise a dynamic loudspeaker, which employs a lightweight diaphragm mechanically coupled to a rigid frame via a flexible suspension that constrains a voice coil to move axially through a cylindrical magnetic gap. When an electrical signal is applied to the voice coil, a magnetic field is created by the electric current in the voice coil, making it a variable electromagnet. The coil and the driver's magnetic system interact, generating a mechanical force that causes the coil (and thus, the attached cone) to move back and forth, thereby reproducing sound under the control of the applied electrical signal coming from the amplifier.

Force sensor 505 may be housed within enclosure 501, and may include any suitable system, device, or apparatus for sensing a force, a pressure, or a touch (e.g., an interaction with a human finger) and generating an electrical or electronic signal in response to such force, pressure, or touch. In some embodiments, such electrical or electronic signal may be a function of a magnitude of the force, pressure, or touch applied to the force sensor. In these and other embodiments, such electronic or electrical signal may comprise a general purpose input/output signal (GPIO) associated with an input signal to which haptic feedback is given. Force sensor 505 may include, without limitation, a capacitive displacement sensor, an inductive force sensor (e.g., a resistive-inductive-capacitive sensor), a strain gauge, a piezoelectric force sensor, force sensing resistor, piezoelectric force sensor, thin film force sensor, or a quantum tunneling composite-based force sensor. For purposes of clarity and exposition in this disclosure, the term "force" as used herein may refer not only to force, but to physical quantities indicative of force or analogous to force, such as, but not limited to, pressure and touch.

Linear resonant actuator 507 may be housed within enclosure 501, and may include any suitable system, device, or apparatus for producing an oscillating mechanical force across a single axis. For example, in some embodiments, linear resonant actuator 507 may rely on an alternating current voltage to drive a voice coil pressed against a moving mass connected to a spring. When the voice coil is driven at the resonant frequency of the spring, linear resonant actuator 507 may vibrate with a perceptible force. Thus, linear resonant actuator 507 may be useful in haptic applications within a specific frequency range. While, for the purposes of clarity and exposition, this disclosure is described in relation to the use of linear resonant actuator 507, it is understood that any other type or types of vibrational actuators (e.g., eccentric rotating mass actuators) may be used in lieu of or in addition to linear resonant actuator 507. In addition, it is also understood that actuators arranged to produce an oscillating mechanical force across multiple axes may be used in lieu of or in addition to linear resonant actuator 507. As described elsewhere in this disclosure, a linear resonant actuator 507, based on a signal received from integrated haptic system 512, may render haptic feedback to a user of host device 502 for at least one of mechanical button replacement and capacitive sensor feedback.

Integrated haptic system 512 may be housed within enclosure 501, may be communicatively coupled to force sensor 505 and linear resonant actuator 507, and may include any system, device, or apparatus configured to receive a signal from force sensor 505 indicative of a force applied to host device 502 (e.g., a force applied by a human finger to a virtual button of host device 502) and generate an electronic signal for driving linear resonant actuator 507 in response to the force applied to host device 502. Detail of an example integrated haptic system in accordance with embodiments of the present disclosure is depicted in FIGURE 6.

Although specific example components are depicted above in FIGURE 5 as being integral to host device 502 (e.g., controller 503, memory 504, force sensor 505, microphone 506, radio transmitter/receiver 508, speakers(s) 510), a host device 502 in accordance with this disclosure may comprise one or more components not specifically enumerated above. For example, although FIGURE 5 depicts certain user interface components, host device 502 may include one or more other user interface components in addition to those depicted in FIGURE 5 (including but not limited to a keypad, a touch screen, and a display), thus allowing a user to interact with and/or otherwise manipulate host device 502 and its associated components.

FIGURE 6 illustrates a block diagram of selected components of an example integrated haptic system 512A, in accordance with embodiments of the present disclosure. In some embodiments, integrated haptic system 512A may be used to implement integrated haptic system 512 of FIGURE 5. As shown in FIGURE 6, integrated haptic system 512A may include a digital signal processor (DSP) 602, a memory 604, and an amplifier 606.

DSP 602 may include any system, device, or apparatus configured to interpret and/or execute program instructions and/or process data. In some embodiments, DSP 602 may interpret and/or execute program instructions and/or process data stored in memory 604 and/or other computer-readable media accessible to DSP 602.

Memory 604 may be communicatively coupled to DSP 602, and may include any system, device, or apparatus configured to retain program instructions and/or data for a period of time (e.g., computer-readable media). Memory 604 may include random access memory (RAM), electrically erasable programmable read-only memory (EEPROM), a Personal Computer Memory Card International Association (PCMCIA) card, flash memory, magnetic storage, opto-magnetic storage, or any suitable selection and/or array of volatile or non-volatile memory that retains data after power to host device 502 is turned off.

Amplifier 606 may be electrically coupled to DSP 602 and may comprise any suitable electronic system, device, or apparatus configured to increase the power of an input signal V_{IN} (e.g., a time-varying voltage or current) to generate an output signal V_{OUT}. For example, amplifier 606 may use electric power from a power supply (not explicitly shown) to increase the amplitude of a signal. Amplifier 606 may include any suitable amplifier class, including without limitation, a Class-D amplifier.

In operation, memory 604 may store one or more haptic playback waveforms. In some embodiments, each of the one or more haptic playback waveforms may define a haptic response a(t) as a desired acceleration of a linear resonant actuator (e.g., linear resonant actuator 507) as a function of time. DSP 602 may be configured to receive a force signal V_{SENSE} indicative of force applied to force sensor 505. Either in response to receipt of force signal V_{SENSE} indicating a sensed force or independently of such receipt, DSP 602 may retrieve a haptic playback waveform from memory 604 and process such haptic playback waveform to determine a processed haptic playback signal V_{IN}. In embodiments in which amplifier 606 is a Class D amplifier, processed haptic playback signal V_{IN} may comprise a pulse-width modulated signal. In response to receipt of force signal V_{SENSE} indicating a sensed force, DSP 602 may cause processed haptic playback signal V_{IN} to be output to amplifier 606, and amplifier 606 may amplify processed haptic playback signal V_{IN} to generate a haptic output signal V_{OUT} for driving linear resonant actuator 507.

In some embodiments, integrated haptic system 512A may be formed on a single integrated circuit, thus enabling lower latency than existing approaches to haptic feedback control. By providing integrated haptic system 512A as part of a single monolithic integrated circuit, latencies between various interfaces and system components of integrated haptic system 512A may be reduced or eliminated.

The problem illustrated in FIGURE 3 may result from a linear resonant actuator 507 with a high quality factor *q* with a sharp peak in impedance/resistance at a resonant frequency *f₀* of linear resonant actuator 507.

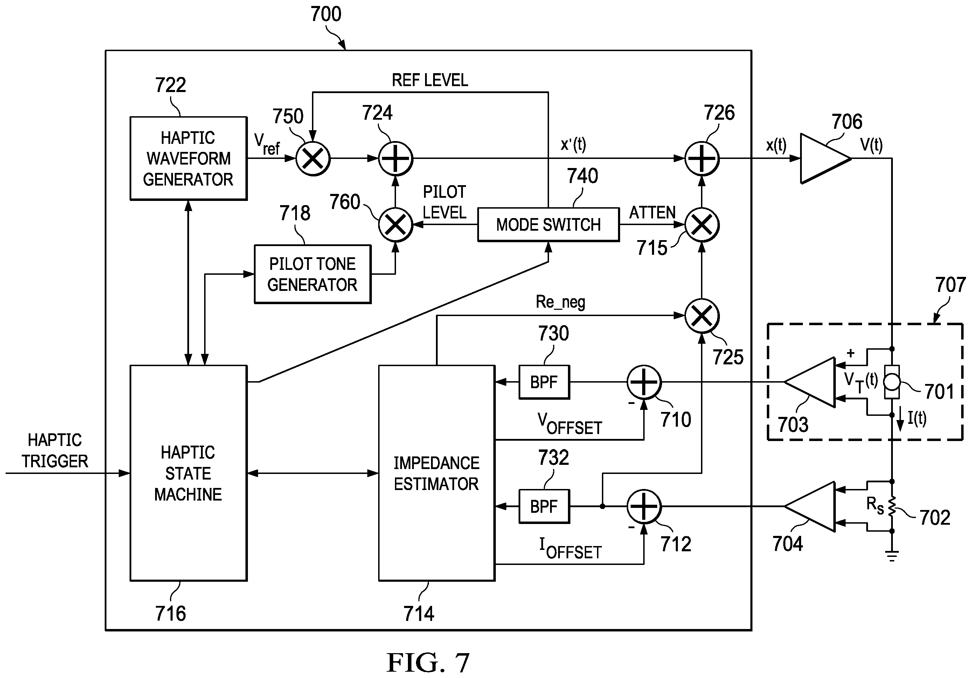

FIGURE 7 illustrates an example transducer driving system 700 for improving dynamics of an electromagnetic load 701, in accordance with the invention. In some embodiments, system 700 may be integral to a host device (e.g., host device 502) comprising system 700 and electromagnetic load 701.

In operation, a haptic waveform generator 722 of a system 700 of a host device generates a haptic playback waveform *V_{ref}*(*t*) which, in the absence of a pilot tone generated by pilot tone generator 718, may be equivalent to a raw transducer driving signal *x'*(*t*) comprising a haptic waveform signal or audio signal. In some embodiments, raw transducer driving signal *x'*(*t*) may be generated based on stored haptic waveforms and/or dynamically-generated haptic waveforms stored by haptic waveform generator 722 or in a memory (e.g., memory 604) accessible to haptic waveform generator 722.

Raw transducer driving signal *x'*(*t*) is received by combiner 726 which combines raw transducer driving signal *x'*(*t*) with a correction term from multiplier 715 to generate transducer driving signal *x*(*t*) in order to effectively cancel some or all of a coil impedance/resistance of electromagnetic load 701, as described in greater detail below. Also as described below, by effectively reducing the coil impedance/resistance of electromagnetic load 701, system 700 may also reduce an effective quality factor *q* of electromagnetic load 701, which may in turn decrease attack time and minimize ringing occurring after the raw transducer driving signal has ended. Although FIGURE 7 depicts a virtual negative impedance/resistance being applied by way of a combiner 726, in some embodiments a negative impedance/resistance filter may be applied to raw transducer driving signal *x'*(*t*) to generate transducer driving signal *x*(*t*) to achieve the same or a similar effect of effectively reducing coil impedance/resistance of electromagnetic load 701. An example of such a negative impedance/resistance filter is described in U.S. Patent Publication No. 2020/0306796 entitled "Methods and Systems for Improving Transducer Dynamics" to Lindemann et al. and is assigned to Cirrus Logic International Semiconductor Ltd. (hereafter referred to as the "Lindemann patent application").

Transducer driving signal *x*(*t*) may in turn be amplified by amplifier 706 to generate a driving signal *V*(*t*) for driving electromagnetic load 701. Responsive to driving signal *V*(*t*)*,* a sensed terminal voltage *V_{T}*(*t*) of electromagnetic load 701 may be converted to a digital representation by a first analog-to-digital converter (ADC) 703. Similarly, sensed current *I*(*t*) may be converted to a digital representation by a second ADC 704. Current *I*(*t*) may be sensed across a shunt resistor 702 having resistance Rₛ coupled to a terminal of electromagnetic load 701. The terminal voltage *V_{T}*(*t*) may be sensed by a terminal voltage sensing block 707, for example a voltmeter.

As shown in FIGURE 7, system 700 includes an impedance estimator 714. Impedance estimator 714 includes any suitable system, device, or apparatus configured to estimate, based on sensed terminal voltage *V_{T}*(*t*)*,* sensed current *I*(*t*)*,* and/or any other measured parameters of electromagnetic load 701, one or more components of the electrical and/or mechanical impedances/resistances of electromagnetic load 701, and generate one or more control signals. One control signal generated by impedance estimator 714 includes a negative impedance/resistance *Re_neg* generated based on an estimate of direct-current (DC) coil impedance/resistance *Re* of electromagnetic load 701. Impedance estimator 714 may also generate a voltage offset *V_{OFFSET}* and a current offset *I_{OFFSET},* which may be subtracted from sensed terminal voltage *V_{T}*(*t*) and sensed current *I*(*t*)*,* respectively, by combiners 710 and 712, respectively, to cancel any measurement offsets that may be present and detected by impedance estimator 714. As described in greater detail below, impedance estimator 714 may generate one or more control signals for communication to haptic state machine 716. In some embodiments, haptic state machine 716 may operate in a manner identical or similar to that described in the Marchais patent application.

Also shown in FIGURE 7 are two bandpass filters (BPF) 730 and 732, respectively, filtering the offset-cancelled versions of the sensed terminal voltage *V_{T}*(*t*) and sensed current *I*(*t*)*.* Bandpass filters 730 and 732 may filter out haptic playback content of driving signal *V*(*t*) from entering impedance estimator 714, and thus possibly biasing it away from an accurate estimate of DC coil impedance/resistance *Re.*

As also depicted in FIGURE 7, a mode switch 740 may receive status indications from the haptic state machine 716 regarding which particular portion of a playback waveform is presently being output by haptic waveform generator 722, as well as an indication of the playback waveform's signal level, and also information regarding the operating mode of the playback waveform - whether it be an open-loop operating mode (e.g., no negative impedance/resistance applied) or a closed-loop operating mode (e.g., negative impedance/resistance applied). As described in greater detail below, based on the above-described inputs, mode switch 740 may control three signal levels: (i) a level of the playback waveform (via a scalar value REF_LEVEL applied by multiplier 750); a level of the pilot signal used to aid in impedance/resistance estimation (via a scalar value PILOT _LEVEL applied by multiplier 760); and a level of a negative impedance/resistance feedback correction signal (via a scalar value ATTEN applied by multiplier 715).

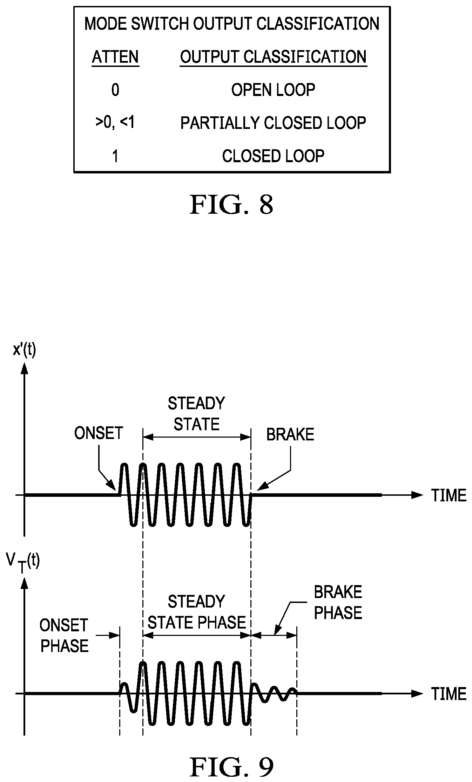

FIGURE 8 illustrates a table of example classifications of operating modes of example transducer driving system 700 of FIGURE 7 based on a value of the scalar value ATTEN, in accordance with embodiments of the present disclosure. If the value of ATTEN is zero, no feedback correction may exist in example transducer driving system 700, and thus the negative impedance/resistance generated by multiplier 725 is effectively absent from example transducer driving system 700 as far as having any effect on the playback waveform. In this case, transducer driving system 700 is classified as "open loop." At the other extreme, if the value of the scaler ATTEN is unity, then example transducer driving system 700 may operate as a negative impedance/resistance system, such as that described in the prior references including but not limited to, the Stahl patent, the Taipale patent application, the Marchais patent application, and the Lindemann patent application. In this case, transducer driving system 700 is classified as "closed loop." If the value of the scaler ATTEN assumes any value in between, but not including, zero and unity, then example transducer driving system 700 may be classified as "partially closed loop." Normally, the partially closed loop system is utilized briefly under circumstances such as, but not limited to, transition between closed loop and open loop, during the start of a haptic playback waveform whose level is too large for a closed loop system to provide enough voltage drive, or during the sudden end of a haptic playback waveform whose level is too large for a closed loop system to provide enough voltage drive.

FIGURE 9 illustrates graphs of an example raw transducer driving signal *x'*(*t*) and an example sensed terminal voltage *V_{T}*(*t*) for example transducer driving system 700 of FIGURE 7 that illustrate different waveform sections that are correlated to haptic terminology for a haptic event, in accordance with embodiments of the present disclosure. Terminology may be provided to classify portions of haptic playback waveforms. The start of a waveform may be known as the onset. For closed-loop systems, the start of a waveform may also be known as the overdrive, because the closed-loop system may provide a much stronger raw transducer driving signal *x'*(*t*) in order to cause the moving mass of electromechanical load 701 to begin moving more quickly. Onset is a term, however, that may apply equally to both open loop and closed loop systems. The sudden end of the haptic playback waveform may be known as brake or braking. Electromechanical load 701, depending on a damping constant of the system, may have a ring that decays over time after brake. Often, it is the desire of haptic product manufacturers for the ringing of electromagnetic load 701 to decay quickly. The term braking implies that some additional components are present to force the decay to occur quickly. Such additional components may be those components making up the negative impedance/resistance closed-loop system (e.g., those systems disclosed in the references incorporated by reference), but such braking may not be available for purely open-loop systems. Nonetheless, the term braking is used here to refer to the portion of the playback waveform including the sudden end and a brief time thereafter to allow for the ringing of the moving mass to fully decay. In between these onset and brake portions of the haptic playback waveform, the haptic playback waveform may be considered to be in steady state as shown in FIGURE 9.

To further illustrate the example classifications of operating modes of example transducer driving system 700 set forth in FIGURE 8 and the example classifications of portions of a haptic playback waveform set forth in FIGURE 9, examples are provided. For some playback waveforms, such as a "click," which is a very brief haptic event composed of one or at most a few cycles of a haptic playback waveform, it may be desirable to play the onset and steady-state portions of the haptic playback waveform itself in open-loop mode (ATTEN = 0). The reason for playing back the onset and steady-state portions of the haptic playback waveform in open-loop mode is that a designer of the haptic event may not wish to design the waveform with a somewhat briefly unpredictable negative impedance/resistance feedback correction term during the waveform itself. That said, in order to minimize ringing decay time after the click event, the designer may wish to switch transducer driving system 700 from open-loop mode to negative impedance/resistance closed-loop mode (ATTEN = 1). In such a case, the transition of the feedback correction signal from fully off (ATTEN = 0) to fully on (ATTEN = 1) may be accomplished via a step function, or possibly a very short ramp from one level to a next level. By so doing, the click may "play" as designed, and end more quickly than the open-loop driving amp would allow otherwise. This switching from open- to closed-loop mode may provide for "crisp" haptic effects (for example, when electromechanical load 701 is a linear resonant actuator) that serve as effective tactile feedback to indicate to a user of a device comprising electromagnetic load 701 that some input by the user (an example such as clicking on a particular letter of the alphabet while composing a text message) has been acknowledged.

As another example, the designer of the haptic events in a device comprising electromagnetic load 701 may wish to have long "buzz" events operate entirely within the negative impedance/resistance closed loop operating mode (ATTEN = 1). The reason for such desire for long "buzz" is that the onset and brake time of such events may be minimized in the closed-loop mode, making for a more pleasing haptic effect to a user, and furthermore the steady state envelope level of the buzz (typically played at resonance of electromagnetic load 701) may be kept more consistently at the target level across unit-to-unit variations and across temperature variations. If during the course of a long buzz event, a sudden input from the user, who may be pressing a virtual button of a device comprising electromagnetic load 701, is to receive acknowledgement of that sudden input by means of a click haptic effect without too much latency between the user input and the click haptic effect, it may be desirable to interrupt the long buzz, by quickly decreasing the value of ATTEN, then playing the open-loop click effect with ATTEN = 0, then increasing ATTEN to 1 in order to crisply brake the click once played, then return to finish the duration of the long buzz. In each of these transitions, the level of ATTEN must be managed.

The levels of the playback waveform itself, along with the pilot signal (needed for impedance/resistance estimation used to close the control loop) may also need to be managed in order to provide the most seamless haptic experience to a user.

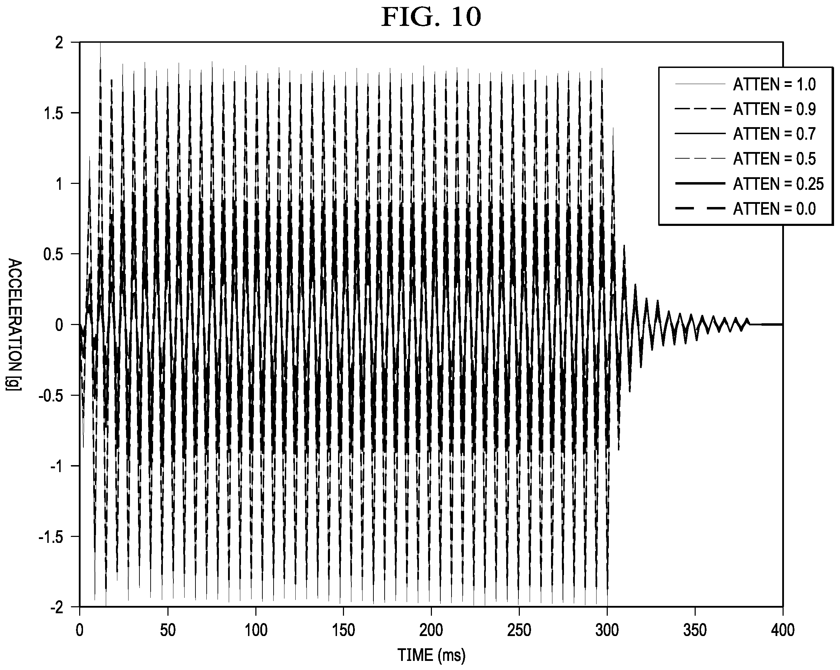

FIGURE 10 illustrates a graph of an example acceleration versus time plot for the moving mass of electromagnetic load 701 that illustrates a problem associated with changing (e.g., via the value of ATTEN) the level of negative impedance feedback correction for example transducer driving system 700, in accordance with embodiments of the present disclosure. In particular, FIGURE 10 illustrates a particular problem that may be associated with switching between the open-loop mode and closed-loop mode - not only does the amount of time spent during onset and brake/braking vary, but so does the level of the driving waveform during steady state. If, for whatever reason, there is motivation to switch between open- and closed-loop output drive, and the product designer wishes to maintain (at least) a constant haptic effect, level-wise at steady state, then the designer of the product must somehow compensate for the wide variation in level differences shown in FIGURE 10.

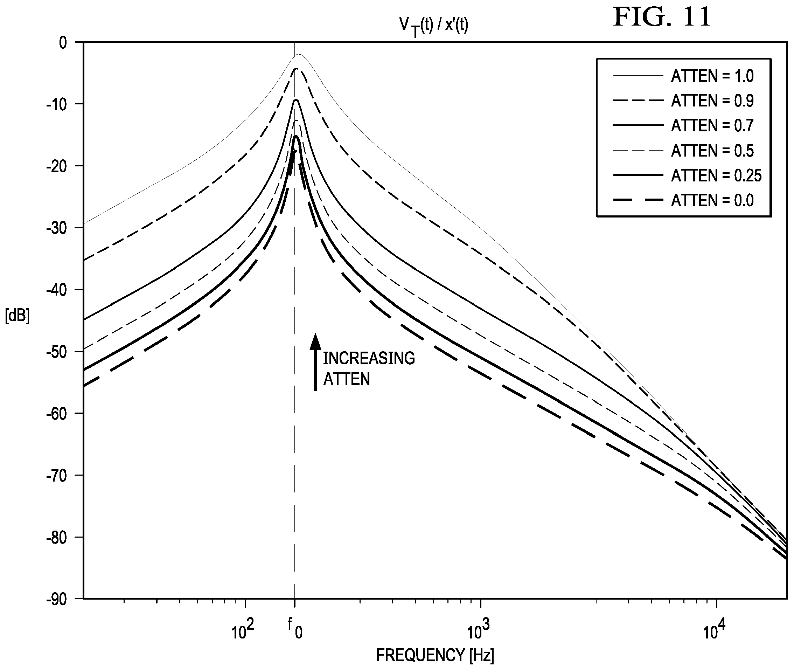

FIGURE 11 illustrates a graph of an example plot of a transfer function between raw transducer driving signal *x'*(*t*) and sensed terminal voltage *V_{T}*(*t*) (which may be representative of a back-EMF of electromagnetic load 701) at various levels of control signal ATTEN for example transducer driving system 700, in accordance with embodiments of the present disclosure. FIGURE 11 illustrates why the problem discussed above with reference to FIGURE 10 may exist, by revealing the transfer function *V_{T}*(*t*)/*x'*(*t*) changes as a function of level of the negative impedance/resistance feedback correction applied. In particular, when the amount of negative impedance/resistance feedback correction is modulated by the ATTEN scalar by multiplier 715, then the ratio of sensed terminal voltage *V_{T}*(*t*) to raw transducer driving signal *x'*(*t*)*,* which may be referred to as the sensitivity, increases monotonically as a function of increasing ATTEN.

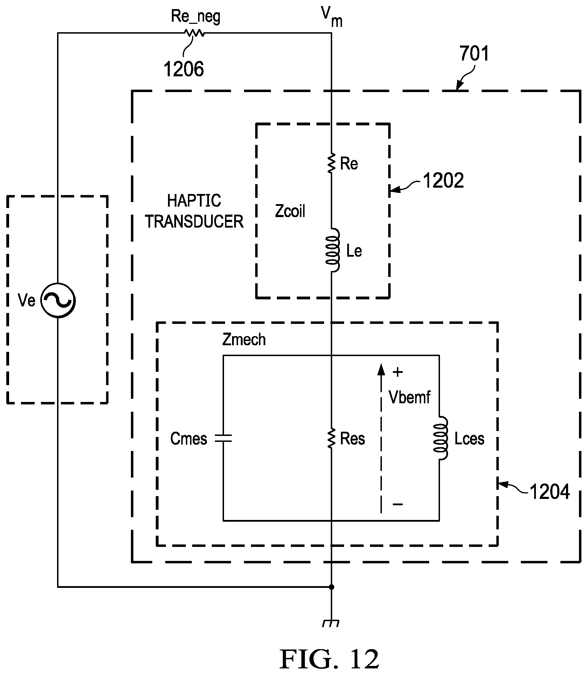

Turning briefly to FIGURE 12, FIGURE 12 illustrates an example of electromagnetic load 701 modelled as a linear system including electrical components 1202 and electrical model of mechanical components 1204 and including a negative resistance resistor 1206 with negative impedance *Re_neg* inserted in series with electromagnetic load 701, in accordance with embodiments of the present disclosure. The addition of negative impedance *Re_neg* may lower quality factor *q* because effectively it subtracts from DC resistance *Re* thereby reducing the overall DC electrical impedance.

In practice, negative resistors do not exist. Instead, example transducer driving system 700 may be configured to behave substantially like the circuit shown in FIGURE 12, including a mathematical model of negative impedance *Re_neg* in series with a mathematical model of electromagnetic load 701. In operation, example transducer driving system 700 (e.g., at the output of combiner 726) may in effect compute a voltage *Vₘ* that would occur at the junction of negative impedance *Re_neg* and DC resistance *Re* as shown in FIGURE 12, if, in fact, it were possible to place a physical resistor with negative impedance *Re_neg* in series with electromagnetic load 701. Computed voltage *Vₘ* may then be used to drive electromagnetic load 701.

In essence, example transducer driving system 700 may implement a sensorless velocity control feedback loop for electromagnetic load 701. The feedback loop may use a dynamic estimate of parameters of electromagnetic load 701 and generate feedback (e.g., negative impedance *Re_neg*) to cancel most of the electrical and mechanical impedance of electromagnetic load 701. In the case of DC coil resistance *Re,* its estimate must be quite accurate (e.g., <1% error) in order for the feedback loop of example transducer driving system 700 to achieve stability and achieve the desired negative impedance effect. The electrical and mechanical impedance of electromagnetic load 701 may change in response to the stimulus applied to it (e.g., amplitude and frequency of driving signal *V*(*t*))*,* ambient temperature conditions, and/or other factors.

Referring to FIGURE 12, a sensitivity *H* for electromagnetic load 701 may be given as: $H = \frac{Vbemf}{Ve} = \frac{Zmech}{\left(Zmech+Zcoil-Re_neg⋅ATTEN\right)}$

At mechanical resonance, *Zmech = res* and |*Zle*| *<< Re_neg*, thus sensitivity at resonance *H0* may be given by: $H 0 = \frac{res}{res + {Re}_{neg} - Re _ neg ⋅ ATTEN} = \frac{res}{res + {Re}_{neg} \left(1-ATTEN\right)}$

Accordingly, a scaling factor REF_LEVEL to be applied to the haptic playback waveform in order to compensate for the problem of changing the level of the negative impedance/resistance feedback correction via control signal ATTEN may be given by: $\begin{matrix}{REF}_{LEVEL} = \frac{H 0 \left(ATTEN=0\right)}{H 0 \left(ATTEN\right)} = \frac{res / \left(res+Re_neg\right)}{res + {Re}_{neg} \left(1-ATTEN\right) / \left(res+Re_neg\right)} \\ = \frac{res + {Re}_{neg} \left(1-ATTEN\right)}{\left(res+Re_neg\right)} = 1 - \left(\frac{{Re}_{neg}}{res + {Re}_{neg}}\right) ⋅ ATTEN\end{matrix}$ Scaling factor REF_LEVEL may thus be a compensating term that may be used to compensate or normalize the output driving signal (specifically at resonance, but that is often the frequency at which a haptic playback waveform is driven during steady state) as a function of control signal ATTEN.

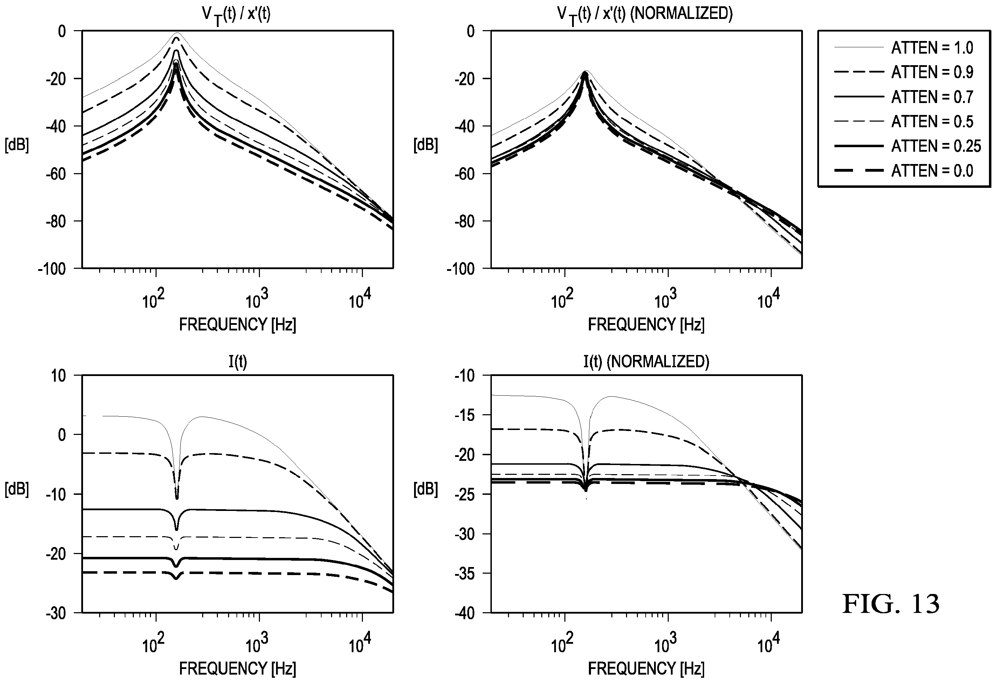

FIGURE 13 shows example waveforms for example transducer driving system 700 that illustrate the benefits of the compensation, in accordance with embodiments of the present disclosure. In particular, the left-hand side of FIGURE 13 depicts sensitivity *V_{T}*(*t*)/*x*'(*t*) and sensed current *I*(*t*) without normalization by scaling factor REF_LEVEL and the right-hand side of FIGURE 13 depicts sensitivity *V_{T}*(*t*)/*x'*(*t*) and sensed current *I*(*t*) with normalization by scaling factor REF_LEVEL.

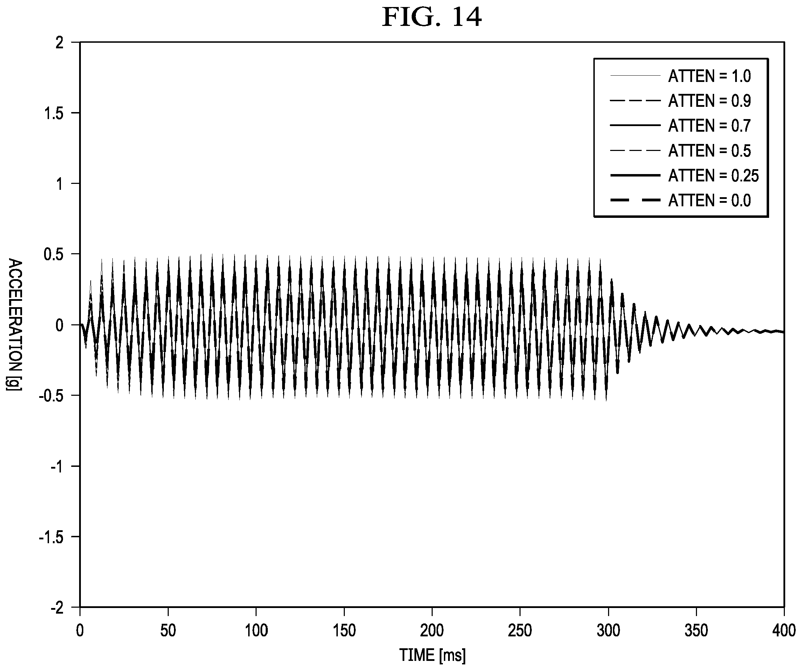

FIGURE 14 illustrates a graph of an example acceleration versus time plot for the moving mass of electromagnetic load 701 with compensation of scaling factor REF_LEVEL applied for example transducer driving system 700, in accordance with embodiments of the present disclosure. When compared with FIGURE 10, FIGURE 14 demonstrates during the steady state portion of the haptic playback waveform, the variability of acceleration as a function of control signal ATTEN minimized as a result of applying compensation of scaling factor REF_LEVEL. However, FIGURE 14 shows that even with such compensation, ringing may occur during onset and ringing may occur during braking that are dependent upon the value of ATTEN.

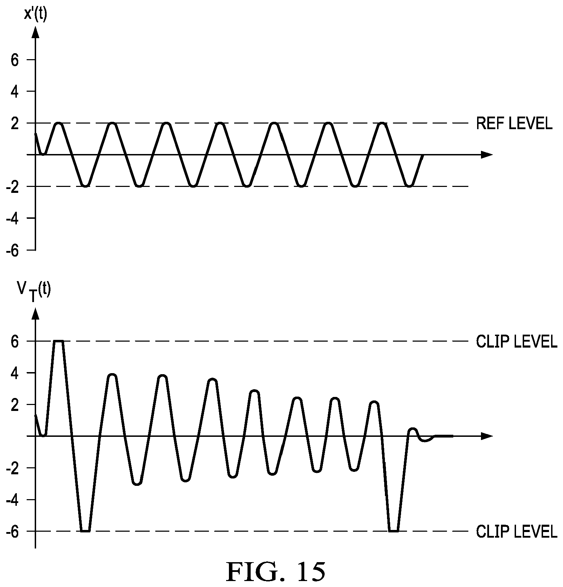

FIGURE 15 illustrates graphs of example waveforms associated with example transducer driving system 700 that illustrate a problem associated with driving very large playback waveforms during a closed-loop operating mode, in accordance with embodiments of the present disclosure. In particular, FIGURE 15 demonstrates a problem that may occur when driving very large raw transducer driving signal *x'*(*t*) while the negative feedback system is fully employed in the closed-loop operating mode (e.g., ATTEN = 1). In existing approaches, at onset and brake/braking, the negative impedance/resistance closed-loop system provides significant amplification of raw transducer driving signal *x'*(*t*) in order to cause the mass of electromagnetic load 701 to move quickly at onset and stop quickly during braking. In fact, this feature is part of the motivation for using a closed-loop system in a haptic vibrational product. However, when a particularly strong playback waveform is sent to such a closed loop system, it is possible that the onset and braking portions of the resulting signal sent to the amplifier exceed the voltage level at which the amplifier may drive. In such a case, signal clipping may occur, as shown by sensed terminal voltage *V_{T}*(*t*) clipping at a voltage CLIP_LEVEL. Clipping is generally undesirable in haptic vibrational systems, as it can damage the electromagnetic load in the long run and produce an undesirable haptic experience in the short run. During the steady state portion of the waveform, it is possible for there to be no clipping issue (as the amplification gain associated with the closed loop system may have been comprehended by the designer of the haptic playback waveform in choosing a level for the playback waveform to maximize steady state level without clipping).

One way to strike a balance between closed loop levels at steady state and "some" closed loop benefits during onset and braking is to dynamically modulate the ATTEN level specifically during the onset and braking portions of the playback waveform.

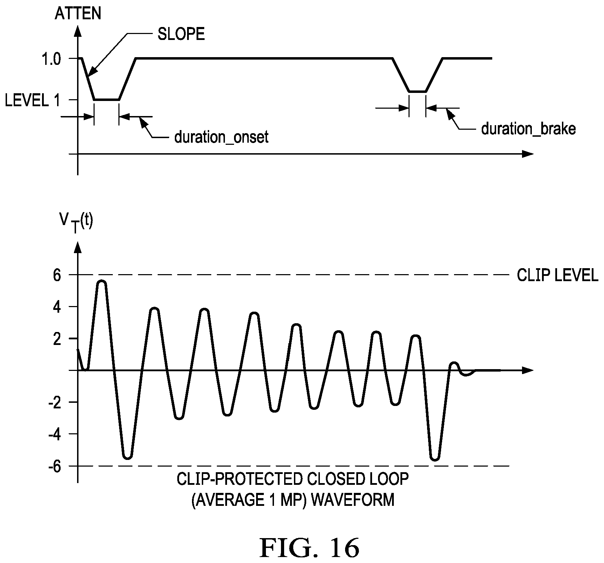

FIGURE 16 illustrates graphs of waveforms for the transducer driving system 700 that depict management of control signal ATTEN that strikes a balance between preventing clipping and maintaining closed loop steady state performance, in accordance with the invention. In particular, during onset, when the closed-loop system provides significant gain, the ATTEN value is briefly decreased to prevent clipping. The amount of decrease, to a level designated as LEVEL_1, may be a function of the amplitude of raw transducer driving signal *x'*(*t*) and the voltage level at which amplifier 706 clips. The rate at which ATTEN decreases at onset may be a function of LEVEL_1 and the frequency of the playback waveform (e.g., most probably the resonant frequency as that is the typical driving frequency and is indicative to a degree of how quickly the amplifier output will reach toward clipping). The amount of time that ATTEN may remain at LEVEL_1, illustrated in FIGURE 16 as duration_onset, may be a function of the frequency of raw transducer driving signal *x'*(*t*)*.* Finally, just as the brief decrease of ATTEN is provided at onset, it another brief decrease is provided at braking. In such a case, the amount of time that ATTEN may remain at LEVEL_1, illustrated in FIGURE 16 as duration_brake, may be a function of the frequency of raw transducer driving signal *x'*(*t*)*.*

Although the foregoing discusses application to a linear electromagnetic load, it is understood that systems and methods similar or identical to those disclosed may be applied to other linear or non-linear systems.

Further, although the foregoing contemplates use of a negative impedance/resistance filter to implement a model of an LRA, in some embodiments, a mathematical equivalent to an LRA may be used in lieu of a model.

As used herein, when two or more elements are referred to as "coupled" to one another, such term indicates that such two or more elements are in electronic communication or mechanical communication, as applicable, whether connected indirectly or directly, with or without intervening elements.

It should be noted and understood that improvements and modifications of the embodiments described above may be made, within the scope of the appended claims. As used in this document, "each" refers to each member of a set or each member of a subset of a set.

Although exemplary embodiments are illustrated in the figures and described below, the principles of the present disclosure may be implemented using any number of techniques, whether currently known or not. The present invention should in no way be limited to the exemplary implementations and techniques illustrated in the drawings and described above. The scope of the invention is defined by the appended claims.

Unless otherwise specifically noted, articles depicted in the drawings are not necessarily drawn to scale.

Although specific advantages have been enumerated above, various embodiments may include some, none, or all of the enumerated advantages. Additionally, other technical advantages may become readily apparent to one of ordinary skill in the art after review of the foregoing figures and description.

## Claims

1. A method of driving, by a transducer driving system (700), a playback waveform to an electromagnetic actuator (701), the method comprising:
operating the transducer driving system in a first mode wherein the electromagnetic actuator is driven with the playback waveform in a closed loop to form a closed-loop voltage drive system, wherein the closed-loop voltage drive system ultilizes a feedback correction signal added to the playback waveform, wherein the feedback correction signal is generated based on an estimate of a coil resistance of the electromagnetic actuator (701);
operating the transducer driving system in a second mode wherein the electromechanical actuator is driven with the playback waveform in an open loop;
operating a mode switch (740) for transitioning the transducer driving system to operate between the first mode and the second mode, the method **characterised by** further comprising, during the first mode:
ramping down, by the mode switch, the feedback correction signal level during a brief onset portion of the playback waveform to avoid clipping of the playback signal driven to the electromechanical actuator; and
ramping up, by the mode switch, the feedback correction signal level after the brief onset portion of the playback waveform so that a desired signal level is achieved during a steady state portion of the playback waveform.

2. The method of Claim 1, wherein the electromagnetic actuator comprises a haptic actuator, and wherein the playback waveform signal plays back discrete haptic events during one or more of the first mode and the second mode.

3. The method of Claim or 2, further comprising:
driving, by the transducer driver system, a first portion of a single haptic event as the playback waveform when operating in the first mode; and
driving, by the transducer driver system, a second portion of the single haptic event as the playback waveform when operating in the second mode.

4. The method of Claim 3, further comprising ramping, by the mode switch, the feedback correction signal from a first level to a second level when transitioning between the first mode and the second mode.

5. The method of Claim 4, wherein the playback waveform associated with the single haptic event plays in its entirety in the second mode, then switches to the first mode at the end of the single haptic event to minimize a brake time, and the method further comprises controlling, by the mode switch, the transition between the first mode and the second mode.

6. The method of Claim 4, wherein the playback waveform associated with the single haptic event plays each of its three phases, namely an onset phase, a steady state phase, and a braking phase, and the method further comprises controlling, with the mode switch, transitions between the first mode and the second mode at phase boundaries of the three phases.

7. The method of any of Claims 4-6, further comprising ramping, by the mode switch, the playback waveform from one level to another level when transitioning between the first mode and the second mode

8. The method of Claim 7, wherein the level of the playback waveform driven to the electromechanical actuator is maintained constant, at steady state, for any level of the feedback correction signal.

9. The method of any of Claims 1-8, wherein a minimum level of the feedback correction signal level to which the mode switch ramps is a function of a level of the playback waveform and a maximum level of the playback waveform at which clipping does not occur.

10. The method of any of Claims 1-8, wherein a minimum level of the feedback correction signal to which the mode switch ramps is a function of a level of the playback waveform and a maximum level of the playback waveform at which undesirable electromechanical actuator effects are perceived by a user.

11. The method of any of Claims 1 - 10, further comprising ramping, by the mode switch, a pilot signal level from one level to another level when transitioning between the first mode and the second mode.

12. The method of Claim 11, wherein the pilot signal level is a function of a level of the feedback correction signal.

13. The method of Claim 11 or 12, further comprising disabling the pilot signal during the second mode.

14. The method of any of Claims 11-13, further comprising modulating the feedback correction signal based on an estimate of an impedance of the electromechanical actuator.

15. A transducer driving system (700) for driving a playback waveform to an electromagnetic actuator (701), the transducer driving system comprising:
an output for generating the playback waveform; and
a control subsystem configured to:
operate the transducer driving system in a first mode wherein the electromagnetic actuator is driven with the playback waveform in a closed loop to form a closed-loop voltage drive system, wherein the closed-loop voltage drive system utilizes a feedback correction signal added to the playback waveform, wherein the feedback correction signal is generated based on an estimate of a coil resistance of the electromagnetic actuator (701);
operate the transducer driving system in a second mode wherein the electromechanical actuator is driven with the playback waveform in an open loop;
operate a mode switch (740) for transitioning the transducer driving system to operate between the first mode and the second mode, **characterised in that** the mode switch is further configured to, during the first mode:
ramp down the feedback correction signal level during a brief onset portion of the playback waveform to avoid clipping of the playback signal driven to the electromechanical actuator; and
ramp up the feedback correction signal level after the brief onset portion of the playback waveform so that a desired signal level is achieved during a steady state portion of the playback waveform.

16. The transducer driving system of Claim 15, wherein the electromagnetic actuator comprises a haptic actuator, and wherein the playback waveform signal plays back discrete haptic events during one or more of the first mode and the second mode.

17. The transducer driving system of Claim 15 or 16, wherein the transducer driving system is further configured to:
drive a first portion of a single haptic event as the playback waveform when operating in the first mode; and
drive a second portion of the single haptic event as the playback waveform when operating in the second mode.

18. The transducer driving system of Claim 17, wherein the mode switch is further configured to ramp the feedback correction signal from a first level to a second level when transitioning between the first mode and the second mode.

19. The transducer driving system of Claim 18, wherein the playback waveform associated with the single haptic event plays in its entirety in the second mode, then switches to the first mode at the end of the single haptic event to minimize a brake time, and wherein the mode switch is further configured to control the transition between the first mode and the second mode.

20. The transducer driving system of Claim 18, wherein the playback waveform associated with the single haptic event plays each of its three phases, namely an onset phase, a steady state phase, and a braking phase, and wherein the mode switch is further configured to control transitions between the first mode and the second mode at phase boundaries of the three phases.

21. The transducer driving system of any of Claims 18-20, wherein the mode switch is further configured to ramp the playback waveform from one level to another level when transitioning between the first mode and the second mode

22. The transducer driving system of Claim 21, wherein the level of the playback waveform driven to the electromechanical actuator is maintained constant, at steady state, for any level of the feedback correction signal.

23. The transducer driving system of any of Claims 15-22, wherein a minimum level of the feedback correction signal level to which the mode switch ramps is a function of a level of the playback waveform and a maximum level of the playback waveform at which clipping does not occur.

24. The transducer driving system of any of Claims 15-23, wherein a minimum level of the feedback correction signal to which the mode switch ramps is a function of a level of the playback waveform and a maximum level of the playback waveform at which undesirable electromechanical actuator effects are perceived by a user.

25. The transducer driving system of any of Claims 15 - 24, wherein the mode switch is further configured to ramp a pilot signal level from one level to another level when transitioning between the first mode and the second mode.

26. The transducer driving system of Claim 25, wherein the pilot signal level is a function of a level of the feedback correction signal.

27. The transducer driving system of Claim 25 or 26, further comprising disabling the pilot tone generator from generating the pilot signal during the second mode.

28. The transducer driving system of any of Claims 15-27, wherein the transducer driving system is further configured to modulate the feedback correction signal based on an estimate of an impedance of the electromechanical actuator.

## Patentansprüche

1. Verfahren zum Ansteuern eines elektromagnetischen Aktuators (701) mittels einer Wiedergabewellenform durch ein Wandleransteuersystem (700), wobei das Verfahren Folgendes umfasst:
Betreiben des Wandleransteuersystems in einem ersten Modus, wobei der elektromagnetische Aktuator mittels der Wiedergabewellenform in einem geschlossenen Kreis angesteuert wird, um ein Spannungsantriebssystem im geschlossenen Kreis zu bilden, wobei das Spannungsantriebssystem im geschlossenen Kreis ein der Wiedergabewellenform hinzugefügtes Rückkopplungskorrektursignal verwendet, wobei das Rückkopplungskorrektursignal basierend auf einer Schätzung eines Spulenwiderstands des elektromagnetischen Aktuators (701) generiert wird;
Betreiben des Wandleransteuersystems in einem zweiten Modus, wobei der elektromechanische Aktuator mittels der Wiedergabewellenform in einem offenen Kreis angesteuert wird;
Betreiben eines Modusschalters (740) zum Umschalten des Betriebs des Wandleransteuersystems zwischen dem ersten Modus und dem zweiten Modus, wobei das Verfahren **dadurch gekennzeichnet ist, dass** es ferner Folgendes umfasst:
während des ersten Modus:
Herunterregeln des Rückkopplungskorrektursignalpegels durch den Modusschalter während eines kurzen Anfangsabschnitts der Wiedergabewellenform, um ein Begrenzen des Wiedergabesignals zum Ansteuern des elektromechanischen Aktuators zu vermeiden; und
Hochregeln des Rückkopplungskorrektursignalpegels durch den Modusschalter nach dem kurzen Anfangsabschnitt der Wiedergabewellenform, so dass ein gewünschter Signalpegel während eines Abschnitts der Wiedergabewellenform im stationären Zustand erreicht wird.

2. Verfahren nach Anspruch 1, wobei der elektromagnetische Aktuator einen haptischen Aktuator umfasst und wobei das Wiedergabewellenformsignal diskrete haptische Ereignisse während eines oder mehrerer des ersten Modus und des zweiten Modus wiedergibt.

3. Verfahren nach Anspruch oder 2, ferner umfassend:
Ansteuern eines ersten Abschnitts eines einzelnen haptischen Ereignisses durch das Wandleransteuersystem als Wiedergabewellenform beim Betrieb in dem ersten Modus; und
Ansteuern eines zweiten Abschnitts eines einzelnen haptischen Ereignisses durch das Wandleransteuersystem als Wiedergabewellenform beim Betrieb in dem zweiten Modus.

4. Verfahren nach Anspruch 3, ferner umfassend ein Regeln des Rückkopplungskorrektursignals durch den Modusschalter von einem ersten Pegel auf einen zweiten Pegel beim Umschalten zwischen dem ersten Modus und dem zweiten Modus.

5. Verfahren nach Anspruch 4, wobei die mit dem einzelnen haptischen Ereignis verknüpfte Wiedergabewellenform in dem zweiten Modus in ihrer Gesamtheit wiedergegeben wird und dann am Ende des einzelnen haptischen Ereignisses in den ersten Modus gewechselt wird, um eine Bremszeit zu minimieren, und das Verfahren ferner ein Steuern der Umschaltung zwischen dem ersten Modus und dem zweiten Modus durch den Modusschalter umfasst.

6. Verfahren nach Anspruch 4, wobei die mit dem einzelnen haptischen Ereignis verknüpfte Wiedergabewellenform jede ihrer drei Phasen, nämlich eine Anfangsphase, eine Phase im stationären Zustand und eine Bremsphase, wiedergibt und das Verfahren ferner ein Steuern von Umschaltungen zwischen dem ersten Modus und dem zweiten Modus an Phasengrenzen der drei Phasen mit dem Modusschalter umfasst.

7. Verfahren nach Anspruch 4-6, ferner umfassend ein Regeln der Wiedergabewellenform durch den Modusschalter von einem Pegel auf einen anderen Pegel beim Umschalten zwischen dem ersten Modus und dem zweiten Modus.

8. Verfahren nach Anspruch 7, wobei der Pegel der Wiedergabewellenform zum Ansteuern des elektromechanischen Aktuators im stationären Zustand konstant für jeden Pegel des Rückkopplungskorrektursignals beibehalten wird.

9. Verfahren nach einem der Ansprüche 1-8, wobei ein Mindestpegel des Rückkopplungskorrektursignalpegels, auf den der Modusschalter regelt, eine Funktion eines Pegels der Wiedergabewellenform und eines Höchstpegels der Wiedergabewellenform, bei dem ein Begrenzen nicht auftritt, ist.

10. Verfahren nach einem der Ansprüche 1-8, wobei ein Mindestpegel des Rückkopplungskorrektursignals, auf den der Modusschalter regelt, eine Funktion eines Pegels der Wiedergabewellenform und eines Höchstpegels der Wiedergabewellenform, bei dem unerwünschte Effekte des elektromechanischen Aktuators durch einen Nutzer wahrgenommen werden, ist.

11. Verfahren nach einem der Ansprüche 1-10, ferner umfassend ein Regeln eines Pilotsignalpegels durch den Modusschalter von einem Pegel auf einen anderen Pegel beim Umschalten zwischen dem ersten Modus und dem zweiten Modus.

12. Verfahren nach Anspruch 11, wobei der Pilotsignalpegel eine Funktion eines Pegels des Rückkopplungskorrektursignals ist.

13. Verfahren nach Anspruch 11 oder 12, ferner umfassend ein Deaktivieren des Pilotsignals während des zweiten Modus.

14. Verfahren nach einem der Ansprüche 11-13, ferner umfassend ein Modulieren des Rückkopplungskorrektursignals basierend auf einer Schätzung einer Impedanz des elektromechanischen Aktuators.

15. Wandleransteuersystem (700) zum Ansteuern eines elektromagnetischen Aktuators (701) mittels einer Wiedergabewellenform, wobei das Wandleransteuersystem Folgendes umfasst:
einen Ausgang zum Generieren der Wiedergabewellenform; und
ein Steueruntersystem, das zu Folgendem ausgelegt ist:
Betreiben des Wandleransteuersystems in einem ersten Modus, wobei der elektromagnetische Aktuator mittels der Wiedergabewellenform in einem geschlossenen Kreis angesteuert wird, um ein Spannungsantriebssystem im geschlossenen Kreis zu bilden, wobei das Spannungsantriebssystem im geschlossenen Kreis ein der Wiedergabewellenform hinzugefügtes Rückkopplungskorrektursignal verwendet, wobei das Rückkopplungskorrektursignal basierend auf einer Schätzung eines Spulenwiderstands des elektromagnetischen Aktuators (701) generiert wird;
Betreiben des Wandleransteuersystems in einem zweiten Modus, wobei der elektromechanische Aktuator mittels der Wiedergabewellenform in einem offenen Kreis angesteuert wird;
Betreiben eines Modusschalters (740) zum Umschalten des Betriebs des Wandleransteuersystems zwischen dem ersten Modus und dem zweiten Modus, **dadurch gekennzeichnet, dass** der Modusschalter ferner, während des ersten Modus, zu Folgendem ausgelegt ist:
Herunterregeln des Rückkopplungskorrektursignalpegels während eines kurzen Anfangsabschnitts der Wiedergabewellenform, um ein Begrenzen des Wiedergabesignals zum Ansteuern des elektromechanischen Aktuators zu vermeiden; und
Hochregeln des Rückkopplungskorrektursignalpegels nach dem kurzen Anfangsabschnitt der Wiedergabewellenform, so dass ein gewünschter Signalpegel während eines Abschnitts der Wiedergabewellenform im stationären Zustand erreicht wird.

16. Wandleransteuersystem nach Anspruch 15, wobei der elektromagnetische Aktuator einen haptischen Aktuator umfasst und wobei das Wiedergabewellenformsignal diskrete haptische Ereignisse während eines oder mehrerer des ersten Modus und des zweiten Modus wiedergibt.

17. Wandleransteuersystem nach Anspruch 15 oder 16, wobei das Wandleransteuersystem ferner zu Folgendem ausgelegt ist:
Ansteuern eines ersten Abschnitts eines einzelnen haptischen Ereignisses als Wiedergabewellenform beim Betrieb in dem ersten Modus; und
Ansteuern eines zweiten Abschnitts eines einzelnen haptischen Ereignisses als Wiedergabewellenform beim Betrieb in dem zweiten Modus.

18. Wandleransteuersystem nach Anspruch 17, wobei der Modusschalter ferner ausgelegt ist, um das Rückkopplungskorrektursignal beim Umschalten zwischen dem ersten Modus und dem zweiten Modus von einem ersten Pegel auf einen zweiten Pegel zu regeln.

19. Wandleransteuersystem nach Anspruch 18, wobei die mit dem einzelnen haptischen Ereignis verknüpfte Wiedergabewellenform in dem zweiten Modus in ihrer Gesamtheit wiedergegeben wird und dann am Ende des einzelnen haptischen Ereignisses in den ersten Modus gewechselt wird, um eine Bremszeit zu minimieren, und wobei der Modusschalter ferner ausgelegt ist, um die Umschaltung zwischen dem ersten Modus und dem zweiten Modus zu steuern.

20. Wandleransteuersystem nach Anspruch 18, wobei die mit dem einzelnen haptischen Ereignis verknüpfte Wiedergabewellenform jede ihrer drei Phasen, nämlich eine Anfangsphase, eine stationäre Phase und eine Bremsphase, wiedergibt, und wobei der Modusschalter ferner ausgelegt ist, um Umschaltungen zwischen dem ersten Modus und dem zweiten Modus an Phasengrenzen der drei Phasen zu steuern.

21. Wandleransteuersystem nach einem der Ansprüche 18-20, wobei der Modusschalter ferner ausgelegt ist, um die Wiedergabewellenform beim Umschalten zwischen dem ersten Modus und dem zweiten Modus von einem Pegel auf einen anderen Pegel zu regeln

22. Wandleransteuersystem nach Anspruch 21, wobei der Pegel der Wiedergabewellenform zum Ansteuern des elektromechanischen Aktuators im stationären Zustand konstant für jeden Pegel des Rückkopplungskorrektursignals beibehalten wird.

23. Wandleransteuersystem nach einem der Ansprüche 15-22, wobei ein Mindestpegel des Rückkopplungskorrektursignalpegels, auf den der Modusschalter regelt, eine Funktion eines Pegels der Wiedergabewellenform und eines Höchstpegels der Wiedergabewellenform, bei dem ein Begrenzen nicht auftritt, ist.

24. Wandleransteuersystem nach einem der Ansprüche 15-23, wobei ein Mindestpegel des Rückkopplungskorrektursignals, auf den der Modusschalter regelt, eine Funktion eines Pegels der Wiedergabewellenform und eines Höchstpegels der Wiedergabewellenform, bei dem unerwünschte Effekte des elektromechanischen Aktuators durch einen Nutzer wahrgenommen werden, ist.

25. Wandleransteuersystem nach einem der Ansprüche 15-24, wobei der Modusschalter ferner ausgelegt ist, um einen Pilotsignalpegel beim Umschalten zwischen dem ersten Modus und dem zweiten Modus von einem Pegel auf einen anderen Pegel zu regeln.

26. Wandleransteuersystem nach Anspruch 25, wobei der Pilotsignalpegel eine Funktion eines Pegels des Rückkopplungskorrektursignals ist.

27. Wandleransteuersystem nach Anspruch 25 oder 26, ferner umfassend ein Deaktivieren des Pilottongenerators, so dass während des zweiten Modus kein Pilotsignal generiert wird.

28. Wandleransteuersystem nach einem der Ansprüche 15-27, wobei das Wandleransteuersystem ferner ausgelegt ist, um das Rückkopplungskorrektursignal basierend auf einer Schätzung einer Impedanz des elektromechanischen Aktuators zu modulieren.

## Revendications

1. Procédé d'entraînement, par un système d'entraînement de transducteur (700), d'une forme d'onde de lecture vers un actionneur électromagnétique (701), le procédé comprenant :
le fonctionnement du système d'entraînement de transducteur dans un premier mode dans lequel l'actionneur électromagnétique est entraîné avec la forme d'onde de lecture en boucle fermée pour former un système d'entraînement de tension en boucle fermée, dans lequel le système d'entraînement de tension en boucle fermée utilise un signal de correction de rétroaction ajouté à la forme d'onde de lecture, dans lequel le signal de correction de rétroaction est généré sur la base d'une estimation d'une résistance de bobine de l'actionneur électromagnétique (701) ;
le fonctionnement du système d'entraînement de transducteur dans un second mode dans lequel l'actionneur électromécanique est entraîné avec la forme d'onde de lecture en boucle ouverte ;
le fonctionnement d'un commutateur de mode (740) pour effectuer une transition du système d'entraînement de transducteur pour qu'il fonctionne entre le premier mode et le second mode, le procédé étant **caractérisé en ce qu'**il comprend en outre ,
durant le premier mode :
la descente en puissance, par le commutateur de mode, du niveau de signal de correction de rétroaction durant une brève partie initiale de la forme d'onde de lecture afin d'éviter l'écrêtage du signal de lecture entraîné vers l'actionneur électromécanique ; et
la montée en puissance, par le commutateur de mode, du niveau de signal de correction de rétroaction après la brève partie initiale de la forme d'onde de lecture de sorte qu'un niveau de signal souhaité est atteint durant une partie à régime permanent de la forme d'onde de lecture.

2. Procédé selon la revendication 1, dans lequel l'actionneur électromagnétique comprend un actionneur haptique, et dans lequel le signal de forme d'onde de lecture lit des événements haptiques discrets durant un ou plusieurs du premier mode et du second mode.

3. Procédé selon la revendication 2 comprenant en outre :
l'entraînement, par le système d'entraînement de transducteur, d'une première partie d'un événement haptique unique en tant que forme d'onde de lecture lors du fonctionnement dans le premier mode ; et
l'entraînement, par le système d'entraînement de transducteur, d'une seconde partie de l'événement haptique unique en tant que forme d'onde de lecture lors du fonctionnement dans le second mode.

4. Procédé selon la revendication 3, comprenant en outre la montée en puissance, par le commutateur de mode, du signal de correction de rétroaction d'un premier niveau à un second niveau lors de la transition entre le premier mode et le second mode.

5. Procédé selon la revendication 4, dans lequel la forme d'onde de lecture associée à l'événement haptique unique est lue dans son intégralité dans le second mode, puis commute au premier mode à la fin de l'événement haptique unique pour minimiser un temps de freinage, et le procédé comprend en outre la commande, par le commutateur de mode, de la transition entre le premier mode et le second mode.

6. Procédé selon la revendication 4, dans lequel la forme d'onde de lecture associée à l'événement haptique unique lit chacune de ses trois phases, à savoir une phase initiale, une phase en régime permanent et une phase de freinage, et le procédé comprend en outre la commande, avec le commutateur de mode, de transitions entre le premier mode et le second mode au niveau de limites de phase des trois phases.

7. Procédé selon l'une quelconque des revendications 4 à 6, comprenant en outre la variation en puissance, par le commutateur de mode, de la forme d'onde de lecture d'un niveau à un autre niveau lors de la transition entre le premier mode et le second mode.

8. Procédé selon la revendication 7, dans lequel le niveau de la forme d'onde de lecture entraînée vers l'actionneur électromécanique est maintenu constant, en régime permanent, pour un niveau quelconque du signal de correction de rétroaction.

9. Procédé selon l'une quelconque des revendications 1 à 8, dans lequel un niveau minimal du niveau du signal de correction de rétroaction vers lequel le commutateur de mode varie en puissance est fonction d'un niveau de la forme d'onde de lecture et d'un niveau maximal de la forme d'onde de lecture auquel l'écrêtage ne se produit pas.

10. Procédé selon l'une quelconque des revendications 1 à 8, dans lequel un niveau minimal du signal de correction de rétroaction vers lequel le commutateur de mode varie en puissance est fonction d'un niveau de la forme d'onde de lecture et d'un niveau maximal de la forme d'onde de lecture auquel des effets d'actionneur électromécanique indésirables sont perçus par un utilisateur.

11. Procédé selon l'une quelconque des revendications 1 à 10, comprenant en outre la variation en puissance, par le commutateur de mode, d'un niveau de signal pilote d'un niveau à un autre niveau lors de la transition entre le premier mode et le second mode.

12. Procédé selon la revendication 11, dans lequel le niveau de signal pilote est fonction d'un niveau du signal de correction de rétroaction.

13. Procédé selon la revendication 11 ou 12, comprenant en outre la désactivation du signal pilote durant le second mode.

14. Procédé selon l'une quelconque des revendications 11 à 13, comprenant en outre la modulation du signal de correction de rétroaction basée sur une estimation d'une impédance de l'actionneur électromécanique.

15. Système d'entraînement de transducteur (700) destiné à entraîner une forme d'onde de lecture vers un actionneur électromagnétique (701), le système d'entraînement de transducteur comprenant :
une sortie pour générer la forme d'onde de lecture ; et
un sous-système de commande configuré pour :
faire fonctionner le système d'entraînement de transducteur dans un premier mode dans lequel l'actionneur électromagnétique est entraîné avec la forme d'onde de lecture en boucle fermée pour former un système d'entraînement de tension en boucle fermée, dans lequel le système d'entraînement de tension en boucle fermée utilise un signal de correction de rétroaction ajouté à la forme d'onde de lecture, dans lequel le signal de correction de rétroaction est généré sur la base d'une estimation d'une résistance de bobine de l'actionneur électromagnétique (701) ;
faire fonctionner le système d'entraînement de transducteur dans un second mode dans lequel l'actionneur électromécanique est entraîné avec la forme d'onde de lecture en boucle ouverte ;
faire fonctionner un commutateur de mode (740) pour effectuer une transition du système d'entraînement de transducteur pour qu'il fonctionne entre le premier mode et le second mode, **caractérisé en ce que** le commutateur de mode est en outre configuré pour, durant le premier mode :
descendre en puissance le niveau de signal de correction de rétroaction durant une brève partie initiale de la forme d'onde de lecture afin d'éviter l'écrêtage du signal de lecture entraîné vers l'actionneur électromécanique ; et
monter en puissance le niveau de signal de correction de rétroaction après la brève partie initiale de la forme d'onde de lecture de sorte qu'un niveau de signal souhaité est atteint durant une partie à régime permanent de la forme d'onde de lecture.

16. Système d'entraînement de transducteur selon la revendication 15, dans lequel l'actionneur électromagnétique comprend un actionneur haptique, et dans lequel le signal de forme d'onde de lecture lit des événements haptiques discrets durant un ou plusieurs du premier mode et du second mode.

17. Système d'entraînement de transducteur selon la revendication 15 ou 16, dans lequel le système d'entraînement de transducteur est en outre configuré pour :
entraîner une première partie d'un événement haptique unique en tant que forme d'onde de lecture lors du fonctionnement dans le premier mode ; et
entraîner une seconde partie de l'événement haptique unique en tant que forme d'onde de lecture lors du fonctionnement dans le second mode.

18. Système d'entraînement de transducteur selon la revendication 17, dans lequel le commutateur de mode est en outre configuré pour faire varier en puissance le signal de correction de rétroaction d'un premier niveau à un second niveau lors de la transition entre le premier mode et le second mode.

19. Système d'entraînement de transucteur selon la revendication 18, dans lequel la forme d'onde de lecture associée à l'événement haptique unique est lue dans son intégralité dans le second mode, puis commute au premier mode à la fin de l'événement haptique unique pour minimiser un temps de freinage, et dans lequel le commutateur de mode est en outre configuré pour commander la transition entre le premier mode et le second mode.

20. Système d'entraînement de transducteur selon la revendication 18, dans lequel la forme d'onde de lecture associée à l'événement haptique unique lit chacune de ses trois phases, à savoir une phase initiale, une phase en régime permanent et une phase de freinage, et dans lequel le commutateur de mode est en outre configuré pour commander des transitions entre le premier mode et le second mode au niveau de limites de phase des trois phases.

21. Système d'entraînement de transducteur selon l'une quelconque des revendications 18 à 20, dans lequel le commutateur de mode est en outre configuré pour faire varier en puissance la forme d'onde de lecture d'un niveau à un autre niveau lors de la transition entre le premier mode et le second mode.

22. Système d'entraînement de transducteur selon la revendication 21, dans lequel le niveau de la forme d'onde de lecture entraînée vers l'actionneur électromécanique est maintenu constant, en régime permanent, pour un niveau quelconque du signal de correction de rétroaction.

23. Système d'entraînement de transducteur selon l'une quelconque des revendications 15 à 22, dans lequel un niveau minimal du niveau du signal de correction de rétroaction vers lequel le commutateur de mode varie en puissance est fonction d'un niveau de la forme d'onde de lecture et d'un niveau maximal de la forme d'onde de lecture auquel l'écrêtage ne se produit pas.

24. Système d'entraînement de transducteur selon l'une quelconque des revendications 15 à 23, dans lequel un niveau minimal du signal de correction de rétroaction vers lequel le commutateur de mode varie en puissance est fonction d'un niveau de la forme d'onde de lecture et d'un niveau maximal de la forme d'onde de lecture auquel des effets d'actionneur électromécanique indésirables sont perçus par un utilisateur.

25. Système d'entraînement de transducteur selon l'une quelconque des revendications 15 à 24, dans lequel le commutateur de mode est en outre configuré pour faire varier en puissance un niveau de signal pilote d'un niveau à un autre niveau lors de la transition entre le premier mode et le second mode.

26. Système d'entraînement de transducteur selon la revendication 25, dans lequel le niveau de signal pilote est fonction d'un niveau du signal de correction de rétroaction.

27. Système d'entraînement de transducteur selon la revendication 25 ou 26, comprenant en outre la désactivation de la génération, par le générateur de tonalité pilote, du signal pilote durant le second mode.

28. Système d'entraînement de transducteur selon l'une quelconque des revendications 15 à 27, dans lequel le système d'entraînement de transducteur est en outre configuré pour moduler le signal de correction de rétroaction sur la base d'une estimation d'une impédance de l'actionneur électromécanique.
